# EUROPÄISCHE PATENTANMELDUNG

(11) **EP 0 831 666 A2**
(43) Veröffentlichungstag der Anmeldung: **25.03.1998**
(21) Anmeldenummer: 97202819.5
(22) Anmeldetag: 15.09.1997
(51) Int. Cl.: H04Q 7/32

(54) **Telekommunikationsgerät, insbesondere Mobilfunkendgerät**

(30) Priorität: 21.09.1996 DE 19638772
(71) Anmelder: Philips Patentverwaltung GmbH, 22335 Hamburg (DE); Philips Electronics N.V., 5621 BA Eindhoven (NL)
(72) Erfinder: Walters, Eckhard, Dipl.-Ing., Röntgenstrasse 24, 22335 Hamburg (DE)
(74) Vertreter: Volmer, Georg, Dipl.-Ing.

(57) **Zusammenfassung**

Die Erfindung bezieht sich auf ein Telekommunikationsgerät, insbesondere Mobilfunkendgerät, mit mindestens einem zur Verarbeitung von Daten dienenden Prozessor (4), dem mindestens ein Datenspeicher (9) zugeordnet ist, der mit dem Prozessor (4) über Daten- und Adreßleitungen eines Bussystems (7, 8) gekoppelt ist.

Zur Reduktion des Energieverbrauchs des eingangs genannten Telekommunikationsgeräts und zur gleichzeitigen Verringerung der Zugriffszeiten des Prozessors auf den Datenspeicher wird vorgeschlagen, daß dem Datenspeicher (9) ein erster Adreßzähler (10) zugeordnet ist, daß der erste Adreßzähler (10) zur Lieferung von Adressen an den Datenspeicher (9) dient und daß Mittel (4, 11, 12) vorgesehen sind, die beim Abweichen einer vom ersten Adreßzähler (10) generierten Adresse von einer parallel vom Prozessor (4) generierten Adresse eine Initialisierung des ersten Adreßzählers (10) durch eine Übertragung der vom Prozessor (4) generierten Adresse über das Bussystem (7, 8) zum ersten Adreßzähler (10) bewirken.

## Beschreibung

Die Erfindung bezieht sich auf ein Telekommunikationsgerät, insbesondere Mobilfunkendgerät, mit mindestens einem zur Verarbeitung von Daten dienenden Prozessor, dem mindestens ein Datenspeicher zugeordnet ist, der mit dem Prozessor über Daten- und Adreßleitungen eines Bussystems gekoppelt ist.

In prozessorgesteuerten Telekommunikationsgeräten sind Prozessoren und Datenspeicher über Bussysteme miteinander gekoppelt, die je nach Systemkonfiguration eine bestimmte Anzahl Datenleitungen und Adreßleitungen aufweisen. Die Bussysteme weisen auch Steuerleitungen auf, über die Steuersignale zwischen den Prozessoren und den Datenspeichern ausgetauscht werden. Als Prozessoren werden beispielsweise Mikroprozessoren oder auch Signalprozessoren verwendet. Beispiele für verwendete Datenspeicher sind RAM, ROM, EPROM und Flash EPROM. Einem Prozessor können mehrere Datenspeicher zugeordnet sein, auf die er zugreifen kann. Um Daten eines Datenspeichers zu laden, werden vom jeweiligen Prozessor Adressen an die Adreßleitungen des Bussystems angelegt und an den Datenspeicher übertragen. Der Datenspeicher überträgt daraufhin die zugehörigen Daten über die Datenleitungen des Bussystems an den Prozessor. Die Adressierung über die Adreßleitungen des Bussystems ist mit einem für viele Anwendungsfälle nicht vernachlässigbaren Energieverbrauch verbunden. Der Energieverbrauch ist insbesondere für Telekommunikationsgeräte, die als Energiequelle eine Batterie oder einen Akkumulator verwenden, eine kritische Größe (z.B. für Mobilfunkendgeräte). Weiterhin ergeben sich durch die Adressierung über Datenbusadreßleitungen bestimmte Mindestzugriffszeiten für einen Zugriff eines Prozessors auf einen Datenspeicher, so daß die Schnelligkeit, mit der Programmabläufe vom Prozessor durchgeführt werden können, entsprechend beschränkt ist.

Der Erfindung liegt daher die Aufgabe zugrunde, den Energieverbrauch des eingangs genannten Telekommunikationsgeräts und gleichzeitig die Zugriffszeiten des Prozessors auf den Datenspeicher zu verringern .

Die Aufgabe wird dadurch gelöst, daß dem Datenspeicher ein erster Adreßzähler zugeordnet ist, daß der erste Adreßzähler zur Lieferung von Adressen an den Datenspeicher dient und daß Mittel vorgesehen sind, die beim Abweichen einer vom ersten Adreßzähler generierten Adresse von einer parallel vom Prozessor generierten Adresse eine Initialisierung des ersten Adreßzählers durch eine Übertragung der vom Prozessor generierten Adresse über das Bussystem zum ersten Adreßzähler bewirken.

Der erste Adreßzähler liefert die zur Adressierung des Datenspeichers notwendigen Adressen. Der Zählerstand des ersten Adreßzählers und damit die von diesem gelieferte Adresse sind der vom Prozessor gelieferten Adresse angepaßt. Die Anpassung erfolgt durch Initialisierung des Adreßzählers und anschließende Änderung des Zählerstandes. Eine Initialisierung des Adreßzählers hat zu erfolgen, wenn zwischen zwei aufeinanderfolgenden vom Prozessor gelieferten Adressen eine Differenz besteht, die größer als ein Inkrementierungs- oder Dekrementierungsschritt des ersten Zählers ist, d.h. wenn ein Adreßsprung vorliegt. Bei den übrigen Adreßänderungen durch den Prozessor ohne derartige Adreßsprünge, was für große Teile von Programmabläufen in der Regel der Fall ist, kann die Adreßänderung durch einfache Anpassung des Zählerstandes des ersten Adreßzählers erfolgen. Die Anpassung kann durch eine Übertragung eines Steuersignals der Prozessoradreßlogik über eine einzelne Steuerleitung zum ersten Adreßzähler erfolgen. Da eine Adressierung über die Adreßleitungen des Bussystems nur bei den Initialisierungen des ersten Adreßzählers erforderlich ist, kann der Energieverbrauch des Telekommunikationsgeräts gesenkt werden, denn die Adressierungen über parallele Adreßleitungen werden jeweils durch die Übertragung eines Steuersignals zum ersten Adreßzähler zu dessen Inkrementierung oder Dekrementierung und das Anlegen der vom ersten Adreßzähler generierten Adresse ohne Benutzung der Adreßleitungen des Bussystems ersetzt, was weniger Energie verbraucht. Weiterhin wird die Zugriffszeit auf den Datenspeicher reduziert, da die Generierung neuer Adressen durch Änderungen des Zählerstandes des ersten Adreßzählers und die Adressierung des Datenspeichers mit den vom ersten Adreßzähler auf diese Weise generierten Adressen weniger Zeit erfordert als die herkömmliche Adressierung über die Adreßleitungen des Bussystems des Telekommunikationsgeräts. Die so erhöhte Verarbeitungsgeschwindigkeit kann durch einen im Prozessor angeordneten Cache-Speicher weiter erhöht werden.

In einer Ausgestaltung der Erfindung ist dem Prozessor ein zweiter Adreßzähler zugeordnet und es sind Mittel zur parallelen Initialisierung und parallelen Zählerstandsänderung des ersten und zweiten Adreßzählers vorgesehen.

Mit dem zweiten Adreßzähler steht dem Prozessor ein Mittel zur Verfügung, mit dem er den Zählerstand des ersten Adreßzählers simulieren kann. Ob eine Adreßübertragung zum ersten Adreßzähler über die Adreßleitungen des Bussystems erforderlich ist, kann durch Auswertung des zweiten Adreßzählers nun am Ort des Prozessors mit wenig Schaltungsaufwand festgestellt werden.

Insbesondere ist eine Vergleichereinheit vorgesehen, die zum Vergleich der vom Prozessor generierten Adressen mit den Zählerständen des zweiten Adreßzählers dient und die nach einem Feststellen einer Ungleichheit zwischen zwei Vergleichswerten ein Laden der entsprechenden vom Prozessor generierten Adresse in den zweiten Adreßzähler und über das Bussystem in den ersten Adreßzähler bewirkt. Die Vergleichereinheit übernimmt die Durchführung der Vergleichsoperationen und Steuerungsfünktionen zum Übertragen einer Adresse in den ersten Adreßzähler. Die Adressierung des Datenspeichers kann schneller durchgeführt werden. Der Hardware-Aufwand zur Realisierung dieser Ausgestaltung ist gering.

Durch eine serielle Übertragung von Adreßdaten über das Bussystem zum ersten Adreßzähler ist es möglich, Adreßleitungen einzusparen. Jedoch ist dieser Vorteil mit einem höheren zeitlichen Aufwand für die Adreßübertragung über das Bussystem verbunden.

Vorzugweise sind einerseits der Datenspeicher und der erste Adreßzähler und/oder andererseits auch der Prozessor, der zweite Adreßzähler und die Vergleichereinheit jeweils auf einem gemeinsamen Chip angeordnet, wodurch die erfindungsgemäße Ausführung des Telekommunikationsgeräts insbesondere bei einer Massenproduktion kostengünstig und mit möglichst wenig einzelnen Bauteilen realisiert wird.

In einer anderen Ausgestaltung der Erfindung ist vorgesehen, daß die Anzahl Adreßleitungen des Bussystems kleiner als die Anzahl Adreßbits pro Adresse ist, daß eine Übertragung einer bestimmten Anzahl höherwertigster Adreßbits einer Adresse zum ersten Adreßzähler vorgesehen ist und daß nachfolgend eine Änderung des Zählerstandes des ersten Adreßzählers mittels von der Prozessorlogik generierter Steuersignale vorgesehen ist, um die nicht übertragenen niederwertigsten Adreßbits zu rekonstruieren. Die gegenüber herkömmlichen und gleiche Adreßlängen verarbeitenden Geräten reduzierte Anzahl erforderlicher Adreßleitungen für zu einer kostengünstigeren Realisierung des Bussystems und zu einem reduzierten Energieverbrauch des Telekommunikationsgeräts, jedoch erhöht sich gegebenenfalls die Zugriffszeit bei Sprüngen. Die Rekonstruktion der nicht über Adreßleitungen zum ersten Adreßzähler und damit zum Datenspeicher übertragenenen Adreßbits durch Änderung des Zählerstandes des ersten Adreßzählers mittels Steuersignalen, die über eine einzige gesonderte Steuerleitung übertragen werden können, ist allerdings schnell und erfordert einen geringen Steuerungsaufwand.

Die Erfindung betrifft auch ein Verfahren zur Adressierung eines Datenspeichers mittels eines Prozessors, der mit dem Datenspeicher über ein Bussystem gekoppelt ist. Das Verfahren beinhaltet, daß ein dem Datenspeicher zugeordneter Adreßzähler Adressen an den Datenspeicher liefert und daß beim Abweichen einer vom Adreßzähler generierten aktuellen Adresse von einer parallel vom Prozessor generierten Adresse eine Initialisierung des Adreßzählers durch eine Übertragung der vom Prozessor generierten aktuellen Adresse über das Bussystem zum Adreßzähler erfolgt.

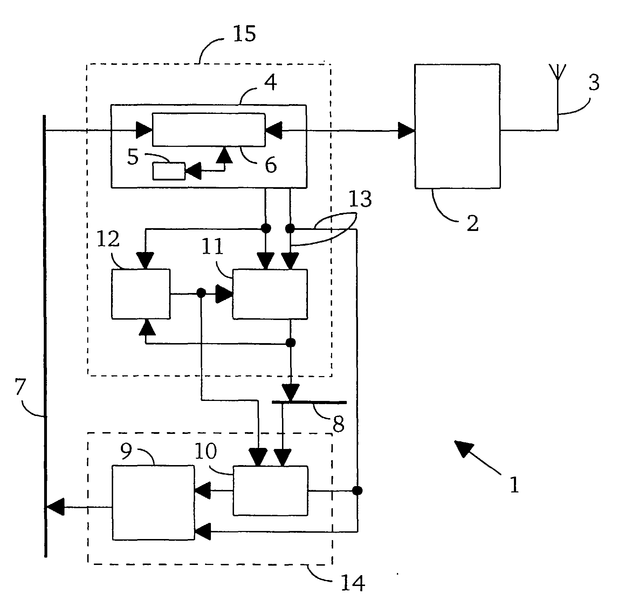

Ausführungsbeispiele der Erfindung werden im folgenden anhand der Zeichnung näher erläutert.

Die Figur zeigt ein erfindungsgemäßes Telekommunikationsgerät.

Das in der Figur dargestellte Telekommunikationsgerät 1 ist im vorliegenden Fall als Mobilfunkendgerät ausgeführt. Es weist eine Sende-/Empfangseinheit (Transceiver) 2 auf, an die eine Sende-/Empfangsantenne 3 angeschlossen ist. Die Sende-/Empfangseinheit 2 kommuniziert mit einem Prozessor 4, der beispielsweise als Mikroprozessor oder Signalprozessor ausgeführt ist. Der Prozessor 4 dient zur Signalverarbeitung von über die Sende-/Empfangseinheit 2 empfangenen Empfangssignalen und von über die Sende-/Empfangseinheit 2 gesendeten Sendesignalen. Er stellt eine zentrale Steuereinheit dar, die die Funktionen des Telekommunikationsgeräts 1 steuert, und weist einen Cache-Speicher 5 auf, der mit den übrigen in einem Funktionsblock 6 zusammengefaßten Einheiten des Prozessors 4 kommuniziert. Der Cache-Speicher 5 dient als Pufferspeicher und beschleunigt in üblicher Weise die Steuerungsfunktionen und die Signal-/Datenverarbeitung des Prozessors 4. Der Programm-Cache-Speicher erlaubt Rücksprünge im internen Cache-Speicher, ohne daß auf einen externen Datenspeicher 9 erneut zugegriffen werden muß.

Das Telekommunikationsgerät 1 enthält ein Bussystem mit einem Datenbus 7 und einem Adreßbus 8. Diese sind zur Verdeutlichung mit fettgedruckten Linien dargestellt. Das Bussystem weist außerdem einen nicht dargestellten Steuerbus auf, über dessen Steuerleitungen der Prozessor 4 Steuersignale mit anderen Komponenten des Telekommunikationsgeräts austauscht.

Das Telekommunikationsgerät 1 enthält einen schon erwähnten Datenspeicher 9 zur Speicherung von zur Ausführung von Programmen erforderlichen Daten. Zum Auslesen von Daten wird der Datenspeicher 9 vom Prozessor 4 addressiert, was später noch näher erläutert wird. Das als Mobilfunkendgerät ausgeführte Telekommunikationsgerät 1 enthält mehrere Prozessoren, im vorliegenden Fall einen Mikroprozessor und einen Signalprozessor. Außerdem sind hier mehrere Datenspeicher vorgesehen ( RAM-Speicher, EPROM-Speicher und Flash EPROM-Speicher). Zur Darstellung des Erfindungsprinzips reicht es aber aus, nur auf einen einzigen Prozessor 4 und einen einzigen Datenspeicher 9 bezug zu nehmen. Dem Datenspeicher 9 ist ein erster Adreßzähler 10 zugeordnet, dessen Zählerstände als Adressen dem Datenspeicher 9 zugeführt werden. Dem Prozessor 4 sind ein zweiter Adresszähler 11 und eine Vergleichereinheit 12 zugeordnet, denen vom Prozessor 4 generierte Adressen parallel zugeführt werden. Die Vergleichereinheit 12 vergleicht die vom Prozessor generierten Adressen jeweils mit dem Zählerstand des Adreßzählers 11. Für den Fall, daß der Zählerstand des Adreßzählers 11 nicht der gerade vom Prozessor 4 gelieferten Adresse entspricht, liefert die Vergleichereinheit 12 sowohl an den zweiten Adreßzähler 11 als auch an den ersten Adreßzähler 10 ein Steuersignal, das ein Laden der gerade vom Prozessor generierten Adresse in die beiden Adreßzähler 10 und 11 bewirkt (Initialisierung der Adreßzähler 10 und 11). Dabei wird die vom Prozessor 4 generierte Adresse direkt, d.h. ohne Benutzung des Bussystems des Telekommunikationsgeräts 1 in den Adreßzähler 11 geladen und in einen entsprechenden Zählerstand des Adreßzählers 11 umgesetzt. Ein Laden dieser Adresse in den Adreßzähler 10 erfolgt über den Adreßbus 8. Dazu ist im vorliegenden Fall der Adreßzähler 11 ausgangsseitig mit dem Adreßbus 8 gekoppelt, wobei der Adreßzähler 10 eingangsseitig mit dem Adreßbus 8 gekoppelt ist.

Für alle Fälle, bei denen die Vergleichereinheit 12 feststellt, daß die vom Prozessor 4 gelieferte Adresse mit dem Zählerstand des Adreßzählers 11 übereinstimmt, wird von dieser keine Initialisierung der Adreßzähler 10 und 11 und keine Adreßübertragung über den Adreßbus 8 wie oben beschrieben bewirkt. Dies ist immer dann der Fall, wenn zwei nacheinander vom Prozessor 4 generierte Adressen keinen Adreßsprung beinhalten, d.h. daß sich die neue Adresse eines entsprechenden Adressenpaars aus der alten Adresse durch einfache Inkrementierung oder Dekrementierung ergibt. Für derartige Fälle, die innerhalb von Programmabläufen wesentlich häufiger sind als Programmsprünge, simuliert der Adreßzähler 10 die Adreßgenerierung durch den Prozessor 4, d.h. sein Zählerstand gibt die vom Prozessor 4 generierte Adresse korrekt wieder. Das gleiche gilt für den Adreßzähler 11. Dazu wird den Adreßzählern 10 und 11 mit jeder Adressengenerierung durch den Prozessor 4 parallel ein Steuersignal über eine Steuerleitung 13 zugeführt, das eine paralle Inkrementierung oder Dekrementierung der Adreßzähler 10 und 11. Ein über die Steuerleitung 13 den Adreßzählern 10 und 11 zugeführtes Steuersignal wird gleichzeitig auch dem Datenspeicher 9 zugeführt, so daß ein Auslesen eines zu der vom Adreßzähler 10 gelieferten Adresse gehörenden Datenwortes und eine Übertragung dieses Datenwortes über den Datenbus 7 zum Prozessor 4 bewirkt wird, der das übertragene Datenwort weiterverarbeitet.

Mit der beschriebenen Erfindung kann der durch die Adressierung des Datenspeichers 9 bedingte Energieverbrauchs des Telekommunikationsgeräts 1 reduziert werden, da eine Adressierung des Datenspeichers 9 über den Adreßbus 8 nur bei den Initalisierungen der Adreßzähler 10 und 11 durchgeführt wird. Bei den übrigen Adressierungen des Datenspeichers 9 wird der Adreßbus nicht benutzt und die Adreßleitungen können energiesparend deaktiviert bleiben. Ebenso werden die Zugriffszeiten auf den Datenspeicher 9 verringert, da bei den Adressierungen ohne Verwendung des Adreßbusses 8 die üblichen Adressierungssteuerungsmaßnahmen zur Steuerung der Adreßübertragung über den Adreßbus 8 entfallen können.

Die Erfindung kann dergestalt weitergebildet werden, daß die Anzahl Adreßleitungen des Adreßbusses 8 verringert wird. Die Anzahl Adreßleitungen ist dann kleiner als die Anzahl Adreßbits pro Adreßwort. Bei den Initialisierungen der Adreßzähler 10 und 11 wird dann nur eine vorgebbare Anzahl höherwertigster Adreßbits über den Adreßbus 8 übertragen. Zur Rekonstruktion der niederwertigsten und nicht übertragenen Adreßbits einer Adresse, mit der die Adreßzähler 10 und 11 initialisiert werden sollen, wird dergestalt durchgeführt, daß über die Steuerleitung 13 vom Prozessor 4 generierte Steuersignale an die Adreßzähler 10 und 11 übertragen werden, die entsprechend der gewünschten Adresse, mit der die Adreßzähler 10 und 11 initialisiert werden sollen, Inkrementierungs- oder Dekrementierungsschritte bewirken. Die verwendeten Steuersignale werden dabei von zwei Steuersignalen eingerahmt, die den Datenspeicher 9 so steuern, daß während der Rekonstruktion der niederwertigsten Adreßbits ein Auslesen von Daten aus dem Datenspeicher 9 nicht erfolgt. Aufgrund der reduzierten Anzahl Adreßleitungen ist auch nur eine entsprechend reduzierte Anzahl Anschlüsse erforderlich, über die an den Adreßbus Adreßbits angelegt oder über die Adreßbits, die über den Adreßbus 8 übertragen wurden, empfangen werden. Vorzugsweise sind der Datenspeicher 9 und der Adreßzähler 10 auf einem gemeinsamen Chip 14 angeordnet. Insbesondere sind auch der Prozessor 4, der Adreßzähler 11 und die Vergleichereinheit 12 Teil eines gemeinsamen Chips 15. Der Kosten- und Hardware-Aufwand zur Realisierung der Adreßzähler 10 und 11 sowie der Vergleichereinheit 12 wird dadurch insbesondere bei einer Massenproduktion des Telekommunikationsgeräts 1 reduziert. Bei einer reduzierten Anzahl Adreßleitungen können die Chips 14 und 15 darüberhinaus aufgrund einer entsprechend reduzierten Anzahl Außenanschlüsse (Pins) kompakter realisiert werden, so daß ihr Platzbedarf reduziert ist.

## Patentansprüche

1. Telekommunikationsgerät, insbesondere Mobilfunkendgerät, mit mindestens einem zur Verarbeitung von Daten dienenden Prozessor (4), dem mindestens ein Datenspeicher (9) zugeordnet ist, der mit dem Prozessor (4) über Daten- und Adreßleitungen eines Bussystems (7, 8) gekoppelt ist,
dadurch gekennzeichnet,
daß dem Datenspeicher (9) ein erster Adreßzähler (10) zugeordnet ist,
daß der erste Adreßzähler (10) zur Lieferung von Adressen an den Datenspeicher (9) dient und daß Mittel (4, 11,12) vorgesehen sind, die beim Abweichen einer vom ersten Adreßzähler (10) generierten Adresse von einer parallel vom Prozessor (4) generierten Adresse eine Initialisierung des ersten Adreßzählers (10) durch eine Übertragung der vom Prozessor (4) generierten Adresse über das Bussystem (7, 8) zum ersten Adreßzähler (10) bewirken.

2. Telekommunikationsgerät nach Anspruch 1,
dadurch gekennzeichnet,
daß dem Prozessor (4) ein zweiter Adreßzähler (11) zugeordnet ist und
daß Mittel (4, 13) zur parallelen Initialisierung und parallelen Zählerstandsänderung des ersten und zweiten Adreßzählers (10, 11) vorgesehen sind.

3. Telekommunikationsgerät nach Anspruch 2,
dadurch gekennzeichnet,
daß eine Vergleichereinheit (12) vorgesehen ist, die zum Vergleich der vom Prozessor (4) generierten Adressen mit den Zählerständen des zweiten Adreßzählers (11) dient und die nach einem Feststellen einer Ungleichheit zwischen zwei Vergleichswerten ein Laden der entsprechenden vom Prozessor (4) generierten Adresse in den zweiten Adreßzähler (11) und über das Bussystem (7, 8) in den ersten Adreßzähler (10) bewirkt.

4. Telekommunikationsgerät nach einem der Ansprüche 1 bis 3,
dadurch gekennzeichnet,
daß eine serielle Übertragung von Adreßdaten über das Bussystem (7, 8) zum ersten Adreßzähler (10) vorgesehen ist.

5. Telekommunikationsgerät nach einem der Ansprüche 1 bis 4,
dadurch gekennzeichnet,
daß der Datenspeicher (9) und der erste Adreßzähler (10) auf einem gemeinsamen Chip (14) angeordnet sind.

6. Telekommunikationsgerät nach einem der Ansprüche 3 bis 5,
dadurch gekennzeichnet,
daß der Prozessor (4), der zweite Adreßzähler (11) und die Vergleichereinheit auf einem gemeinsamen Chip (15) angeordnet sind.

7. Telekommunikationsgerät nach einem der Ansprüche 1 bis 6,
dadurch gekennzeichnet,
daß die Anzahl Adreßleitungen (8) des Bussystems (7, 8) kleiner als die Anzahl Adreßbits pro Adresse ist,
daß eine Übertragung nur bestimmten Anzahl höherwertigster Adreßbits einer Adresse zum ersten Adreßzähler (10) vorgesehen ist und
daß nachfolgend eine Änderung des Zählerstandes des ersten Adreßzählers (10) mittels von der Prozessorlogik des Prozessors (4) generierter Steuersignale (13) vorgesehen ist, um die nicht übertragenen niederwertigsten Adreßbits zu rekonstruieren.

8. Telekommunikationsgerät nach einem der Ansprüche 1 bis 7,
dadurch gekennzeichnet,
daß das im Prozessor (4) ein Cache-Speicher (5) vorgesehen ist.

9. Verfahren zur Adressierung eines Datenspeichers (9) mittels eines Prozessors (4), der mit dem Datenspeicher (9) über ein Bussystem (7, 8) gekoppelt ist,
dadurch gekennzeichnet,
daß ein dem Datenspeicher (9) zugeordneter Adreßzähler (10) Adressen an den Datenspeicher (9) liefert und
daß beim Abweichen einer vom Adreßzähler (10) generierten aktuellen Adresse von einer parallel vom Prozessor (4) generierten Adresse eine Initialisierung des Adreßzählers (10) durch eine Übertragung der vom Prozessor (4) generierten aktuellen Adresse über das Bussystem (7, 8) zum Adreßzähler (10) erfolgt.
